# EUROPEAN PATENT APPLICATION

(11) **EP 4 815 490 A1**
(43) Date of publication of application: **30.09.2026**
(21) Application number: 24894443.1
(22) Date of filing: 08.11.2024
(51) Int. Cl.: H04N 25/773, H04N 25/766

(54) **SPAD-BASED IMAGE SENSOR AND OPERATING METHOD THEREOF**

(30) Priority: 20.11.2023 KR 20230160266
(71) Applicant: XO Semiconductor Inc., Chuncheon-si, Gangwon-do 24329 (KR)
(72) Inventor: CHAE, Youngcheol, Seoul 06276 (KR); PARK, Byungchoul, Seoul 06298 (KR)
(74) Representative: Jung, Minkyu
(86) International application number: PCT/KR2024/016985
(87) International publication number: WO 2025/110549

(57) **Abstract**

The present invention provides an SPAD based image sensor and a method of operating the same that may maintain operation performance while reducing a number of column lines by including a pixel array including a plurality of pixel pairs connected to a plurality of first and second row lines extending in a row direction and a plurality of common column line groups extending in a column direction and arranged in a matrix form, and a peripheral circuit configured to, when the first and second pixel values are sequentially transmitted through a common column line group to which the first and second pixels of a pixel pair disposed in a selected row in the pixel array are commonly connected, receive and store the transmitted first and second pixel values, and output the first and second pixel values received from and stored in a previously selected pixel pair while the first and second pixel values are being stored.

## Description

### [Technical Field]

The present invention relates to an image sensor and a method of operating the same, and more particularly, to a SPAD based image sensor and a method of operating the same.

### [Background Art]

An image sensor is a device that detects incident light and converts the detected light into an electrical signal to implement an image, and may include various sensing elements capable of detecting light. CMOS devices or CCD devices have mainly been used as the conventional light sensing elements. However, due to an increase in demand for ultra-high-sensitivity optical sensors, a Single Photon Avalanche Diode (hereinafter, referred to as SPAD) device capable of directly detecting a single photon which is a minimum unit of light has recently been developed, and thus research for image sensors using the SPAD device is being actively conducted.

The SPAD device may detect light with ultra-high sensitivity by applying a reverse bias voltage equal to or greater than a breakdown voltage and being triggered even by a single photon such that an avalanche breakdown phenomenon may occur. When the avalanche breakdown phenomenon occurs as photons are detected, a large current temporarily flows through the SPAD device, and the SPAD device outputs a signal having an impulse waveform. In addition, after outputting the impulse signal, the SPAD device is quenched to return to a previous state. Accordingly, a SPAD based image sensor counts a number of impulse signals output from the SPAD device provided in each of a plurality of pixels to detect an intensity of incident light, thereby acquiring an image.

In the SPAD based image sensor, each pixel includes the SPAD device and a counter for counting the number of impulse signals generated in the SPAD device, and here, a count range and a number of bits of the counter are determined in advance according to an intended use of the image sensor.

A pixel value counted by the counter is temporarily stored in a memory module provided in a chip implemented with the image sensor through a readout circuit and then is output outside the chip. At this time, when each of the plurality of pixels is selected and activated by a word line, the pixel value counted by the counter of the corresponding pixel is transmitted to the memory module through a connected column line.

Since the pixel value counted by the counter is composed of a plurality of bits, a plurality of column lines corresponding to the number of bits of the counter are connected to each pixel in the SPAD based image sensor. That is, a plurality of bit values constituting the pixel value in the counter of each pixel are transmitted in parallel to the memory module through a column line group including the plurality of column lines. Here, the bit values of the pixel value are transmitted in parallel in order to satisfy an operating speed required for the image sensor.

However, as performance requirements for the image sensor has recently increased significantly, not only has the number of pixels provided in the image sensor increased significantly, but a number of bits of a pixel value that each pixel may identify has also increased. Although one column increases in a pixel array of the image sensor, column lines should be increased in units of column line groups according to the number of bits of the pixel value, and thus a very large number of column lines should be increased. In addition, when the number of bits of the pixel value increases, the number of column lines included in each column line group increases. There is a problem that an increase in the number of bits of the pixel value not only represents an increase in the number of columns in the image sensor but also causes an increase in an area occupied by the column line group in each pixel, thereby restricting sizes of the SPAD or other components.

In particular, when the number of column lines included in the column line group increases, parasitic capacitance components increase, and thus it is required to increase a read time for reading pixel values or a size of a transistor for driving the column lines. Therefore, there is a limitation in that an operating speed of the image sensor should be reduced or a size of each pixel should be increased.

### [Disclosure]

### [Technical Problem]

An object of the present invention is to provide a SPAD based image sensor and a method of operating the same that may maintain operational performance while reducing a number of column lines.

Another object of the present invention is to provide a SPAD based image sensor and a method of operating the same capable of suppressing an increase in operating speed by allowing pixels adjacent to each other to share and use column lines, and enabling a two-stage memory including three memories to store pixel values transmitted from pixels sharing the column lines while simultaneously outputting the stored pixel values to the outside.

### [Technical Solution]

According to an embodiment of the present invention, a SPAD based image sensor includes: a pixel array including a plurality of pixel pairs connected to a plurality of first and second row lines extending in a row direction and a plurality of common column line groups extending in a column direction, and arranged in a matrix form; and a peripheral circuit configured to, when first and second pixel values are sequentially transmitted through the common column line group to which first and second pixels of a pixel pair disposed in a selected row in the pixel array are commonly connected, receive and store the transmitted first and second pixel values, and output the first and second pixel values received from and stored in a previously selected pixel pair while the first and second pixel values are being stored.

The first pixel is connected to the first row line and the common column line group, and when the first row line is activated, may transmit an acquired first pixel value to the peripheral circuit through the common column line group, and the second pixel is connected to the second row line and the common column line group, and when a second row line is activated, may transmit an acquired second pixel value to the peripheral circuit through the common column line group.

The peripheral circuit may include: a first stage memory configured to sequentially receive and store first and second pixel values acquired by first and second pixels of a pixel pair of the selected row; and a second stage memory configured to simultaneously receive and store the first and second pixel values stored in the first stage memory, and output the first and second pixel values previously received from and stored in the first stage memory while the first stage memory stores first and second pixel values of another pixel pair.

The first stage memory may include: a first memory configured to receive and store the first pixel value transmitted through the common column line group from the first pixel of the pixel pair of the selected row; and a second memory configured to receive and store the second pixel value transmitted through the common column line group from the second pixel of the pixel pair of the selected row.

The peripheral circuit may include a pixel bit transfer circuit configured to, when one of the first and second row lines is activated, transfer each bit value of the pixel value acquired by a pixel connected to an activated row line among the pixel pair to the first stage memory.

Each of the first and second pixels may include: a SPAD configured to detect photons and generate pulse signals; and a counter configured to acquire a pixel value by counting a number of the pulse signals.

The common column line group may include a number of column lines corresponding to a number of bits of the first and second pixel values.

The peripheral circuit may sequentially activate the first and second row lines according to a command applied by an external control module, and may precharge a plurality of column lines of the common column line group before each of the first and second row lines is activated.

The peripheral circuit may determine and store the first and second pixel values by detecting a voltage level of each of a plurality of column lines, changed depending on each bit value of the first and second values acquired in the first and second pixels.

According to another embodiment of the present invention, a method of operating an image sensor including a pixel array and a peripheral circuit, wherein the pixel array including a plurality of pixel pairs including first and second pixels connected to each of first and second row lines extending in a row direction and commonly connected to a common column line group extending in a column direction and arranged in a matrix form, the method including: respectively acquiring first and second pixel values by the first and second pixels of the plurality of pixel pairs; sequentially receiving and storing, by the peripheral circuit, the first and second pixel values acquired by the first and second pixels through the common column line group from a pixel pair disposed in a selected row; and outputting previously stored first and second pixel values while the first and second pixel values are stored.

### [Advantageous Effects]

In the SPAD based image sensor and the method of operating the same, pixels adjacent to each other share and use column lines, and a two-stage memory including three memories stores pixel values transmitted from pixels sharing the column lines while simultaneously outputting the stored pixel values to the outside, thereby maintaining operational performance while reducing a number of column lines.

### [Description of Drawings]

FIG. 1 is a view showing a schematic configuration of a SPAD based image sensor.
FIG. 2 is a view showing a schematic configuration of a pixel of FIG. 1.
FIG. 3 is a view showing a schematic configuration of a SPAD based image sensor according to an embodiment.
FIG. 4 is a view showing a configuration for outputting pixel values in a peripheral circuit of FIG. 3.
FIG. 5 is a timing diagram describing an operation of the peripheral circuit of FIG. 4.
FIG. 6 is a view showing a method of operating a SPAD based image sensor according to an embodiment.

### [Mode of Invention]

Hereinafter, specific embodiments according to an embodiment of the present invention will be described with reference to the drawings. The following detailed description is provided to facilitate a comprehensive understanding of the methods, apparatuses, and/or systems described herein. However, this is merely an example, and the present invention is not limited thereto.

In describing the embodiments of the present invention, when it is determined that a detailed description of known technology related to the present invention may unnecessarily obscure the gist of the embodiment, the detailed description thereof will be omitted. Further, the terms described later are terms defined in consideration of functions in the present invention, and may vary according to the intention or custom of a user or an operator. Therefore, the definition thereof should be made based on the contents throughout the present specification. The terms used in the detailed description are merely for describing certain embodiments and should not be construed as limiting. Unless clearly used otherwise, expressions in the singular form include meanings in the plural form. In the present description, expressions such as "comprise" or "include" are intended to refer to certain characteristics, numbers, steps, operations, elements, parts thereof, or combinations thereof, and should not be construed as excluding the presence or possibility of one or more other characteristics, numbers, steps, operations, elements, parts thereof, or combinations thereof in addition to those described. In addition, the terms "unit," "device," "module," and "block" described in the present specification refer to a unit for processing at least one function or operation, and may be implemented by hardware, software, or a combination of hardware and software.

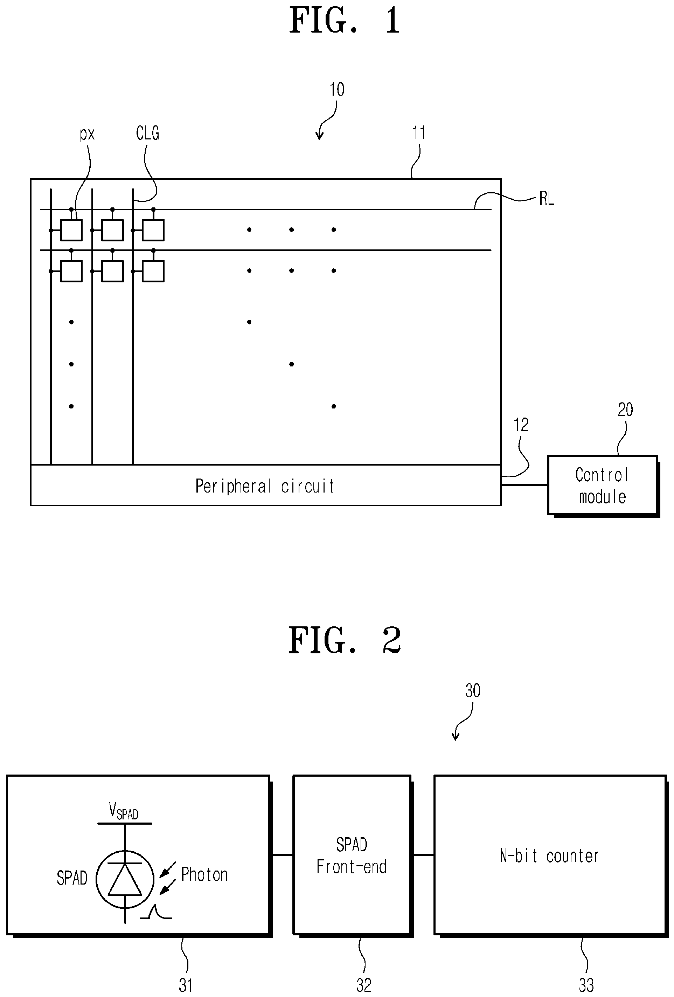

FIG. 1 is a view showing a schematic configuration of a SPAD based image sensor, and FIG. 2 is a view showing a schematic configuration of a pixel of FIG. 1.

Referring to FIG. 1, a SPAD based image sensor 10 includes a pixel array 11 and a peripheral circuit 12. The pixel array 11 includes a plurality of pixels px arranged in an array, and may include, for example, pixels px arranged in L×M. FIG. 2 shows an example of a configuration of one pixel 30 among the plurality of pixels px of the pixel array 11 of FIG. 1.

The pixel 30 shown in FIG. 2 may be configured to include a SPAD 31, a front-end module 32, and a counter 33.

The SPAD 31 may be implemented as an avalanche diode operating in a Geiger mode by applying a reverse bias voltage V_{SPAD} equal to or greater than a breakdown voltage (e.g., 23 V). The SPAD 31 may generate an impulse, in response to an avalanche breakdown phenomenon triggered by reacting to photons with ultra-sensitivity.

The front-end module 32 may control driving of the SPAD 31 and may convert an impulse signal output from the driven SPAD 31 into a pulse signal to transmit to the pulse signal to the counter 33.

In an example, the front-end module 32 may apply a driving control voltage having a predetermined level to an anode terminal of the SPAD 31 such that a voltage difference between both terminals of the SPAD 31 becomes lower than the breakdown voltage. However, a method of controlling the driving of the SPAD 31 may be variously changed.

In addition, the front-end module 32 may convert the impulse signal into a pulse signal having a low voltage level compared to the impulse signal and transmit the pulse signal to the counter 33. As described above, when the reverse bias voltage V_{SPAD} of a high voltage (e.g., 23 V), is applied to the SPAD 31 and a photon is incident to cause the avalanche breakdown phenomenon, an impulse signal with a high voltage may be generated. In order for the impulse signal not to be transmitted as it is to the counter 33, the front-end module 32 may level-shift the applied impulse signal with the high voltage to a low voltage level (e.g., 3 V), convert the level-shifted impulse signal into a pulse signal, and transmit the pulse signal to the counter 33.

Further, the front-end module 32 may quickly quench the SPAD 31 in which the avalanche breakdown phenomenon has occurred so as to return to its previous state, and may reset the counter 33 to initialize a pixel value counted by the counter 33.

The front-end module 32 may operate according to various signals applied from the peripheral circuit 12 to drive the SPAD 31 and reset the counter 33. The front-end module 32 may drive the SPAD 31 during a set exposure time so as to generate a number of impulse signals corresponding to a number of photons incident during the exposure time. In addition, after the exposure time, when the pixel value counted by the counter 33 is transmitted to the peripheral circuit 12, the counter 33 may be reset.

The front-end module 32 may include a plurality of switches implemented with transistors, a plurality of logic elements, and a level-shift circuit, however, components and a circuit configuration constituting the front-end module 32 may be variously designed, and thus a detailed description thereof will be omitted herein.

The counter 33 counts a number of pulse signals applied from the front-end module 32 to acquire a pixel value obtained by measuring an amount of light (or light intensity) incident on the pixel 30. In this case, the counter 33 may be implemented as an N-bit counter, and a number of bits (N) of the counter 33 may be set in advance according to an intended use of the image sensor. When the counter 33 is implemented as the N-bit counter, N bit cells for storing an N-bit pixel value are included in the counter 33. Each of the N bit cells stores a corresponding bit value in the counted N-bit pixel value.

The peripheral circuit 12 generates and outputs various control signals for operating the front-end module 32 in response to a command applied from an outside (e.g., a control module 20). The peripheral circuit 12 may apply the control signals to the front-end module 32 during the exposure time so that the front-end module 32 drives the SPAD 31 and controls the counter. However, for convenience of description, a line provided for transmitting the control signals from the peripheral circuit 12 to the front-end module 32 are not separately shown herein.

Meanwhile, after the exposure time, the peripheral circuit 12 receives and stores a counted pixel value from the counters 33 of the plurality of pixels px in the pixel array 11. To this end, the peripheral circuit 12 selects a pixel to receive a pixel value among the plurality of pixels px in the pixel array 11. In addition, the peripheral circuit 12 receives and stores a pixel value stored in the counter of the selected pixel px. The peripheral circuit 12 may transmit the stored pixel value to the outside of the image sensor 10 (here, the control module 20).

Here, the peripheral circuit 12 may selectively activate a plurality of row lines RL in order to select a pixel px to output a pixel value in the pixel array 11. That is, the plurality of pixels px arranged in the pixel array 11 may be selected on a row basis. In addition, pixel values stored in the N bit cells of the counter 33 in each of pixels px selected by being connected to an activated row line RL are transmitted to the peripheral circuit 12 through corresponding column line groups CLG.

For convenience, although it is shown in FIG. 1 that the column line group CLG is a single line, each of a plurality of column line groups CLG shown in FIG. 1 is composed of N column lines CL each connected to the N bit cells of the counter 33. That is, each bit of the pixel value counted by the counter 33 is transmitted to the peripheral circuit 12 on a bit-by-bit basis through a connected column line among the N column lines CL of the column line group CLG.

The peripheral circuit 12 may receive and store pixel values from each of the plurality of pixels px connected to the selected row line RL through the plurality of column line groups CLG. In addition, the peripheral circuit 12 may output the stored pixel values to the outside (here, the control module 20).

The control module 20 applies a command to the peripheral circuit 12 so that the peripheral circuit 12 generates various control signals for controlling the front-end module 32 of each of the plurality of pixels px in the pixel array 11, thereby controlling driving of the SPAD 31 included in each pixel px. For example, the control module 20 may enable the plurality of pixels px in the pixel array 11 to detect light simultaneously or to detect pixels on a row-by-row or column-by-column basis.

In addition, the control module 20 may receive a pixel value of each pixel stored in the peripheral circuit 12 to constitute an image. The control module 20 may operate not only as a control circuit that controls the pixel array 11 but also as an image processing circuit.

The pixel array 11 and the peripheral circuit 12 of the image sensor 10 may be implemented in a single chip, and the control module 20 may also be implemented in the same chip. However, the control module 20 is generally implemented separately outside the chip. In addition, the SPAD 31, the front-end module 32, and the counter 33 may be implemented on the same layer of the chip. However, in some cases, the SPAD 31, the front-end module 32, and the counter 33 may be implemented on different layers.

However, in the image sensor 10 of FIG. 1, the pixel values are transmitted to the peripheral circuit 12 through the column line groups CLG provided in a one-to-one correspondence with the counters 33 of the plurality of pixels px in the pixel array 11, and thus a very large number of column lines CL should be formed. As described above, when L×M pixels are arranged in the pixel array 11 and the counter 33 is the N-bit counter, M column line groups CLG, that is, M×N column lines CL should be formed in the pixel array 11.

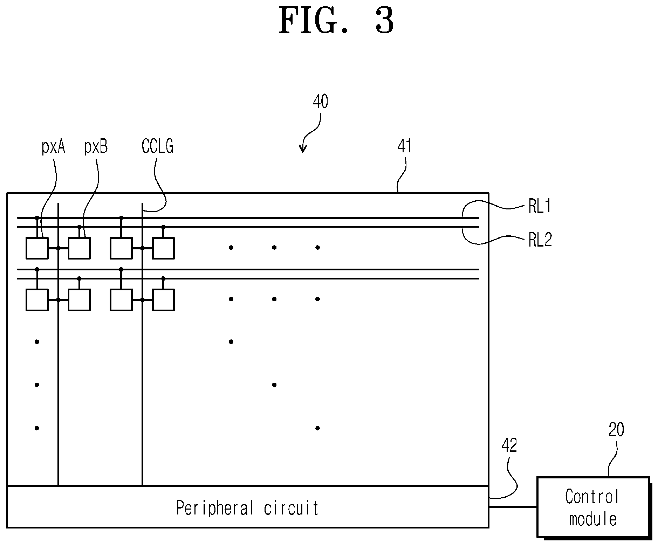

FIG. 3 is a view showing a schematic configuration of a SPAD based image sensor according to an embodiment.

In FIG. 3, an image sensor 40 includes a pixel array 41 and a peripheral circuit 42, and a plurality of pixels px are arranged in the pixel array 41 in a matrix form. However, in the pixel array 11 of FIG. 1, the plurality of arranged pixels px are connected to one column line group CLG for each individual column, whereas in FIG. 3, two pixel columns adjacent to each other commonly share and use one column line group CCLG. Here, the column line group CCLG commonly used by the two pixel columns may be referred to as a common column line group. That is, a pixel column pair arranged adjacent to each other among a plurality of pixel columns together use one common column line group CCLG. In addition, in each row of the pixel column pair, two pixels px commonly connected to the common column line group CCLG form a pixel pair pxA and pxB, which are distinguished herein as a first pixel pxA and a second pixel pxB for convenience of description.

However, in a structure in which a pixel column pair is commonly connected to one common column line group CCLG, when the first and second pixels pxA and pxB are simultaneously selected and transmit pixel values to the common column line CCLG, the pixel values transmitted from each of the first and second pixels pxA and pxB collide with each other in the common column line CCLG. Accordingly, in the pixel array 41 of FIG. 3, two row lines RL1 and RL2 are formed for each pixel row so that the first and second pixels pxA and pxB are not simultaneously selected. A first row line RL1 among the two row lines RL1 and RL2 may be connected to the first pixel pxA, while a second low line may be connected to the second pixel pxB.

The first and second pixels pxA and pxB differ only in that they are connected to the first and second row lines RL1 and RL2, respectively and are commonly connected to the common column line group CCLG, in terms of configuration, the first and second pixels pxA and pxB may be configured identically to the pixel px shown in FIG. 2.

In the pixel array 41 of FIG. 3, since the first and second pixels pxA and pxB are connected to different row lines RL1 and RL2, the number of row lines RL is doubled compared to the pixel array 11 of FIG. 1. However, since two pixel columns commonly share and use the common column line group CCLG, the pixel array 41 of FIG. 3 may reduce the number of common column line groups CCLG by half compared to the pixel array 11 of FIG. 1.

Although two row lines RL1 and RL2 are formed for each pixel row, as described above, the common column line group CCLG includes N column lines CL. Therefore, when the number of common column line groups CCLG is reduced by half, a size of a region required for forming a line may instead be significantly reduced in terms of each of the pixels pxA and pxB. For example, when the counter provided in each of the pixels pxA and pxB is a 10-bit counter, in the pixel array 11 of FIG. 1, a region in which one row line RL and ten column lines CL are formed is required in each pixel px. On the other hand, in the pixel array 41 of FIG. 3, a region in which two row lines RL and five column lines CL are formed is required in each of the pixels pxA and pxB. Therefore, the size of the region may be reduced by a size corresponding to approximately four lines. When a size of a region in which a line should be formed in each of the pixels pxA and pxB is reduced, a size of the image sensor 10 may be reduced. Alternatively, while maintaining the size of the image sensor 10, the size of the SPAD 31 included in each of the pixels pxA and pxB is increased to increase the light-incident area, thereby further improving the light sensitivity of the SPAD 31.

In addition, since the total number of column lines CL in the pixel array 41 is significantly reduced, the parasitic capacitance component of the column line CL is reduced. Therefore, pixel values may be effectively transmitted even with a low driving capability.

However, as described above, in the image sensor 40 of FIG. 3, the first and second pixels pxA and pxB are commonly connected to the common column line group CCLG, and thus pixel values may not be simultaneously transmitted to the peripheral circuit 42. That is, the first and second pixels pxA and pxB should be sequentially selected to transmit the counted pixel values. This causes a problem in that a readout time required for the pixel values of the pixel array 41 to be transmitted to the peripheral circuit 42 and output to the outside increases.

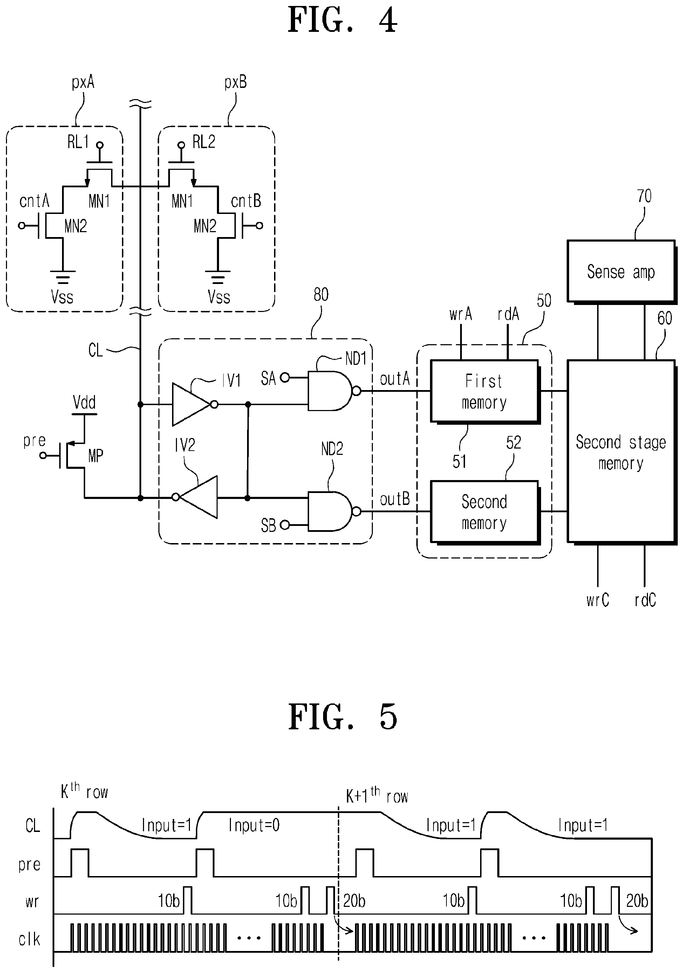

FIG. 4 is a view showing a configuration for outputting pixel values in the peripheral circuit of FIG. 3, and FIG. 5 is a timing diagram describing an operation of the peripheral circuit of FIG. 4.

In order to suppress an increase in the above-described readout time, the peripheral circuit 42 in the image sensor 40 according to the embodiment has a memory with a two-stage structure as shown in FIG. 4. A first stage memory 50 receives and stores pixel values from the counter 33 of a pixel selected among the plurality of pixels pxA and pxB of the pixel array 41. In addition, a second stage memory 60 receives and stores the pixel values stored in the first stage memory 50, and outputs the stored pixel values to the outside.

Meanwhile, the first stage memory 50 may include first and second memories 51 and 52. The first and second memories 51 and 52 store pixel values of a pixel pair pxA and pxB that are alternately transmitted through the common column line group CCLG, and may simultaneously transmit the stored pixel values to the second stage memory 60.

When the first pixel pxA among the pixel pair pxA and pxB is selected, the first memory 51 of the first stage memory 50 receives and stores a pixel value transmitted from the counter 33 of the selected first pixel pxA through the common column line group CCLG. In addition, when the second pixel pxB is selected, the second memory 52 receives and stores a pixel value transmitted from the counter 33 of the selected second pixel pxB through the common column line group CCLG. When the pixels values of the pixel pair pxA and pxB are all stored in each of the first and second memories 51 and 52 of the first stage memory 50, the stored pixel values may be simultaneously transmitted to the second stage memory 60. Accordingly, the second stage memory 60 may receive and store together the pixel values transmitted from each of the first and second memories 51 and 52 of the first stage memory 50.

In addition, while the first and second memories 51 and 52 of the first stage memory 50 alternatively receive and store pixel values of another pixel pair pxA and pxB, the second stage memory 60 may output the previously received and stored pixel values. That is, while the first and second memories 51 and 52 of the first stage memory 50 receive and store pixel values, the second stage memory 60 outputs the stored pixel values to the outside, thereby reducing a readout time for outputting the pixel values of the pixel pair pxA and pxB to the outside. In other words, it is possible to suppress so that a readout time taken for the pixel pair pxA and pxB to share and use the common column line group CCLG does not increase as much as possible.

Hereinafter, an example of a configuration of a pixel bit transfer circuit 80 for transmitting the pixel values of the pixel pair pxA and pxB to the first stage memory 50 and an operation thereof will be described with reference to FIG. 4.

For convenience of description, only a transfer circuit according to a path through which a one-bit value among N-bit pixel values in the pixel pair pxA and pxB is transmitted to the first stage memory 50 through one column line CL is schematically shown in FIG. 4. However, the common column line group CCLG includes N column lines CL for transmitting the N-bit pixel values. Therefore, practically, N pixel bit transfer circuits having the same configuration may be implemented for each pixel pair. In addition, since a plurality (e.g., M/2 herein) of pixel column pairs are arranged in the pixel array 41, for example, N×M/2 pixel bit transfer circuits may be implemented in the peripheral circuit 42, but the present invention is not limited thereto.

As shown in FIG. 4, each of a pair of first and second pixels pxA and pxB includes first and second transistors MN1 and MN2 that are connected in series between the column line CL of the common column line group CCLG and a ground voltage Vss.

As described above, only the path through which the one-bit value among the N-bit pixel values is transmitted is described herein, and thus only one first and one second bit cell transistors MN1 and MN2 are shown for each of the first and second pixels pxA and pxB. However, each of the first and second pixels pxA and pxB includes N first and N second bit cell transistors MN1 and MN2, corresponding to the N column lines CL included in the common column line group CCLG. The first and second bit cell transistors MN1 and MN2 may be implemented as NMOS transistors. Here, a gate of the first bit cell transistor MN1 is connected to a first or second row line RL1 or RL2 for selecting one pixel from the pixel pair pxA and pxB. In addition, a one-bit value of a pixel value from one corresponding bit cell among the N bit cells provided in the counter 33 of the corresponding pixel pxA or pxB is applied to a gate of the second bit cell transistor MN2. Since the gate of the second bit cell transistor MN2 is connected to the bit cell of the counter 33, the second bit cell transistor MN2 is turned on or off according to the bit value stored in the bit cell.

Meanwhile, a precharge transistor MP is connected between a power voltage Vdd and the column line CL, and receives a precharge signal pre through a gate thereof. The precharge transistor MP may be implemented as a PMOS transistor and, when the precharge signal pre is activated, may precharge the column line CL to a power voltage Vdd level. Here, the precharge transistor MP may be commonly connected to the N column lines CL of the common column line group CCLG instead of one column line CL.

In FIG. 4, the precharge transistor MP and the first and second bit cell transistors MN1 and MN2 are configurations that are also included in each pixel px in conventional image sensors. However, whereas one row line RL is formed for each pixel row in the conventional image sensors, in FIG. 3, two row lines (RL1, RL2) are formed for each pixel row, and accordingly, the first bit cell transistor MN1 is connected to either the first row line RL1 or the second row line RL2 according to the pixel pxA or pxB in which it is included.

The pixel bit transfer circuit 80 may include two NAND gates ND1 and ND2 that are connected in parallel to each other between the column line CL and each of the first and second memories 51 and 52.

A first NAND gate ND1 among the two NAND gates ND1 and ND2 has a first input terminal connected to the column line CL and a first pixel selection signal SA activated when the first pixel pxA among the pixel pair pxA and pxB is selected is applied to a second input terminal. Accordingly, the first NAND gate ND1 transmits, to the first memory 51, a result obtained by performing a NAND operation on the bit value of the pixel value transmitted through the column line CL and the first pixel selection signal SA.

In addition, a second NAND gate ND2 has a first input terminal connected to the column line CL and a second pixel selection signal SB activated when the second pixel pxB is selected is applied to a second input terminal. The second NAND gate ND2 transmits, to the second memory 52, a result obtained by performing a NAND operation on the bit value of the pixel value transmitted through the column line CL and the second pixel selection signal SB.

Here, the precharge signal pre and the first and second pixel selection signals SA and SB may be generated in the peripheral circuit 42 according to a command applied from the outside, and in some cases may be applied from the outside in the form of a direct command.

The pixel bit transfer circuit 80 may further include a latch circuit that is connected between the column line CL and the first input terminals of the first and second NAND gates ND1 and ND2 and that includes two inverters IV1 and IV2.

An operation of the configuration of FIG. 4 will be described with reference to FIG. 5. First, the precharge signal pre is activated such that the precharge transistor MP is turned on. When the precharge transistor MP is turned on, the N column lines CL of each of the plurality of common column line groups CCLG are precharged to the power voltage Vdd level. In addition, a pixel row (e.g., a Kth pixel row) to receive the pixel value is determined, and a first row line RL1 of the determined pixel row is activated.

When the first row line RL1 is activated, the first bit cell transistor MN1 of the first pixel pxA in the pixel pair pxA and pxB is turned on, and the second bit cell transistor MN2 is turned on or turned off according to the bit value stored in the bit cell of the counter 33. The second bit cell transistor MN2 may be turned on when the bit value stored in the corresponding bit cell is "1". In this case, since both the first and second bit cell transistors MN1 and MN2 are in a turned-on state, the voltage level of the column line CL precharged to the power voltage Vdd level drops. The voltage level of the column line CL gradually drops due to a capacitance component or the like. The latch circuit may not only cause the voltage level of the column line CL to drop more rapidly when it falls below a certain level, but also perform a function of assisting in pulling the voltage level down to the ground voltage level.

When the voltage level of the column line CL drops, the latch circuit inverts the voltage level and applies a signal having a high level to the first input terminals of the first and second NAND gates ND1 and ND2. In addition, the first NAND gate ND1 among the first and second NAND gates ND1 and ND2 is activated to a high level and performs a logical AND operation between the applied first pixel selection signal SA and an output of the latch circuit to transmit a bit value having a low level to the first memory 51 of the first stage memory 50. In addition, the second NAND gate ND2 performs a logical AND operation between the second pixel selection signal SB deactivated to a low level and the output of the latch circuit to transmit a bit value having a high level to the second memory 52.

A first write signal wrA is activated to be applied to the first memory 51, and accordingly, the first memory 51 stores the bit value of the pixel value applied from the first NAND gate ND1. As described above, although only a path through which a one-bit value is transmitted is shown in FIG. 4, in practice, all N bit values constituting a pixel value are transmitted, and thus, the pixel value acquired from the first pixel pxA is stored in the first memory 51.

At this time, a second write signal wrB applied to the second memory 52 is maintained in a deactivated state. Therefore, the bit value applied from the second NAND gate ND2 is not stored in the second memory 52.

When the pixel value acquired in the first pixel pxA is stored in the first memory 51, the precharge signal pre is activated again to precharge the column line CL to the power voltage Vdd level. Thereafter, the second row line RL2 of the same pixel row (e.g., the Kth pixel row) is activated to turn on the first bit cell transistor MN1 of the second pixel pxB. The second bit cell transistor MN2 of the second pixel pxB is turned on or turned off according to the bit value stored in the bit cell of the counter 33. When the bit value stored in the corresponding bit cell is "0", the second bit cell transistor MN2 is maintained in an off state. When the second bit cell transistor MN2 is maintained in the off state, the voltage level of the column line CL is maintained as the power voltage Vdd level. In this case, the latch circuit may assist so that the voltage level of the column line CL is stably maintained as the power voltage Vdd level.

The latch circuit inverts the power voltage Vdd level of the column line CL and applies a signal having a low level to the first input terminals of the first and second NAND gates ND1 and ND2. In addition, the second NAND gate ND2 among the first and second NAND gates ND1 and ND2 is activated to a high level and performs a logical AND operation between the applied second pixel selection signal SB and the output of the latch circuit to transmit a bit value having a high level to the second memory 52. In addition, the first NAND gate ND1 performs a logical AND operation between the first pixel selection signal SA deactivated to a low level and the output of the latch circuit to transmit a bit value having a high level to the first memory 51.

The second write signal wrB is activated to be applied to the second memory 52, and accordingly, the second memory 52 stores the pixel value applied from the second NAND gate ND2. On the other hand, the first memory 51 does not store the bit value applied from the first NAND gate ND1 due to the deactivated first write signal wrA.

That is, the first and second memories 51 and 52 alternatively receive and store pixel values. In addition, after the first and second write signals wrA and wrB are deactivated, the first and second memories 51 and 52 transmit two pixel values stored according to first and second read signals rdA and rdB that are simultaneously activated and applied to the second stage memory 60. The second stage memory 60 stores the pixel values transmitted from the first and second memories 51 and 52 in response to a third write signal wrC that is activated together with the first and second read signals rdA and rdB. As above-described example, when a ten-bit pixel value is transmitted from each of the pixels pxA and pxB, the first and second memories 51 and 52 alternately receive and store the ten-bit pixel value. In addition, the two pixel values each having ten bits may be simultaneously transmitted to the second stage memory 60. That is, a twenty-bit pixel value may be transmitted to the second stage memory 60.

As described above, the pixel bit transfer circuit 80 detects a change in the voltage level of the precharged column line CL and stores the pixel values of the pixel pair pxA and pxB in the first and second memories 51 and 52 of the first stage memory 50, and thus a time required until the pixel values are stored in each of the first and second memories 51 and 52 is very long. However, since a process in which the two pixel values stored in the first and second memories 51 and 52 are transmitted to the second stage memory 60 and are stored in the second stage memory 60 is performed using a digital manner, the process may be performed very quickly.

When the pixel values of the pixel row stored in the first and second memories 51 and 52 are transmitted to and stored in the second stage memory 60, the column line CL is precharged to the power voltage Vdd level according to the re-activated precharge signal pre, and a next pixel row (e.g., a (K+1)th pixel row) is selected, and the first row line RL1 of the selected pixel row is activated, so that pixel values acquired by the pixel pair pxA and pxB arranged in the next pixel row are stored in the first and second memories 51 and 52 of the first stage memory.

In addition, while the pixel values are being stored in the first and second memories 51 and 52 of the first stage memory 50, the second stage memory 60 outputs the stored pixel values to the outside in response to an activated third read signal rdC.

However, in most cases, it is difficult for data output from a memory to be transmitted directly to an external device (e.g., the control module 20) due to limitations in driving capability of the memory. Accordingly, the peripheral circuit 42 of the image sensor 40 may further include a sense amp 70, and the sense amp 70 may receive the pixel values output from the second stage memory 60 to amplify the pixel values, and output the amplified pixel values to the outside with a strong driving force. In this process, although a time is required for the sense amp 70 to amplify the pixel values, since a time required for the pixel bit transfer circuit 80 to store the pixel values of the pixel pair pxA and pxB in the first and second memories is longer, substantially, an additional time is not required for outputting the pixel values to the outside.

Therefore, as shown in FIG. 3, as pixel columns arranged adjacent to each other are paired to share and use one common column line group CCLG, although the time required to store the pixel values of the pixel pair pxA and pxB in the first stage memory 50 is doubled, an increase in an operating time of the image sensor 40 may be suppressed by outputting previously stored pixel values to the outside during the time in which the pixel values are being stored in the first stage memory 50, thereby preventing an additional time from being required for pixel value output.

In the shown embodiment, each component may have different functions and capabilities in addition to those described below and may include additional configurations in addition to those described below. In addition, in an embodiment, each component may be implemented using one or more physically separated devices, or may be implemented by one or more processors or by a combination of one or more processors and software, and may not be clearly distinguished in specific operations unlike the shown example.

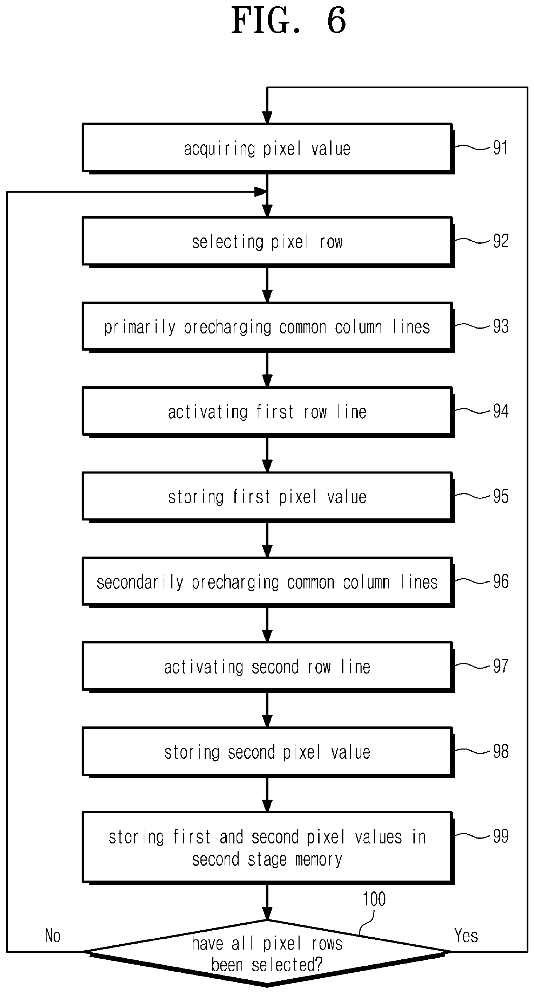

FIG. 6 is a view showing a method of operating a SPAD based image sensor according to an embodiment.

Referring to FIG. 6, the SPAD based image sensor of the present invention first acquires pixel values by counting a number of incident photons at each of a plurality of pixels arranged in a matrix form (91). When each of the plurality of pixels acquires a pixel value, a pixel row to output the pixel value is selected among the plurality of pixels (92). Then, N column lines CL of a common column line group CCLG that are shared and used by two pixel columns adjacent to each other in the plurality of pixels are primarily precharged (93). When the column lines CL are precharged, a first row line RL1 is activated to select a first pixel pxA among two pixels pxA and pxB connected to the common column line group CCLG in the selected pixel row (94). When the first row line RL1 is activated and the first pixel pxA is selected, a first pixel value acquired from the selected first pixel is stored in the first memory 51 of the first stage memory 50 (95).

When the first pixel value is stored in the first memory 51, the N column lines CL of the common column line group CCLG are secondarily precharged (96). Then, a second row line RL2 is activated in order to select a second pixel pxB among the two pixels pxA and pxB connected to the common column line group CCLG in the selected pixel row (97). When the second row line RL2 is activated and the second pixel pxB is selected, a second pixel value acquired from the selected second pixel is stored in the second memory 52 of the first stage memory 50 (98).

Here, while the first and second pixel values are being stored in the first and second memories 51 and 52, the second stage memory 60 outputs the first and second pixel values that were applied from and stored in the previous first and second memories 51 and 52 to the outside.

Meanwhile, when the first and second pixel values are stored in the first and second memories 51 and 52, the first and second pixel values stored in the first and second memories 51 and 52 are transmitted to and stored in the second stage memory 60 (99). Then, it is determined whether all pixel rows from which pixel values are to be output have been selected (100). When it is determined that all the pixel rows are not selected, another pixel row is selected again (92). However, when it is determined that all the pixel rows have been selected, each of the plurality of pixels again counts a number of incident photons to acquire pixel values (91). However, in some cases, the operation of the image sensor may be terminated without reacquiring pixel values.

In FIG. 6, although it is described that respective processes are sequentially performed, this is merely illustrative, and those skilled in the art may apply various modifications and changes by changing an order described in FIG. 6, performing one or more processes in parallel, or adding other processes without departing from the essential characteristics of the embodiment of the present invention.

Although the present invention has been described above in detail through a representative embodiment, those skilled in the art will understand that various modifications and other equivalent embodiments are possible therefrom. Accordingly, the true technical scope of protection of the present invention should be determined by the technical spirit of the appended claims.

## Claims

1. An image sensor comprising:
a pixel array(11) including a plurality of pixel pairs connected to a plurality of first and second row lines extending in a row direction and a plurality of common column line groups extending in a column direction and arranged in a matrix form; and
a peripheral circuit(12),
wherein the peripheral circuit(12) includes:
a first stage memory(50) configured to, when first and second pixel values are sequentially transmitted through the common column line group to which first and second pixels of a pixel pair disposed in a selected row in the pixel array are commonly connected, receive and store the transmitted first and second pixel values; and
a second stage memory(60) configured to output the stored first and second pixel values while the first stage memory(50) stores the first and second pixel values.

2. The image sensor of claim 1,
wherein the first pixel is connected to the first row line and the common column line group, and when the first row line is activated, transmits an acquired first pixel value to the peripheral circuit through the common column line group, and
wherein, the second pixel is connected to the second row line and the common column line group and when a second row line is activated, transmits an acquired second pixel value to the peripheral circuit through the common column line group.

3. The image sensor of claim 1,
wherein the first stage memory(50) sequentially receives and stores first and second pixel values acquired by first and second pixels of the pixel pair of the selected row,
wherein the second stage memory(60) simultaneously receives and stores the first and second pixel values stored in the first stage memory and
outputs the first and second pixel values received from and stored in the first stage memory while the first stage memory stores first and second pixel values of another pixel pair.

4. The image sensor of claim 3,
wherein the first stage memory(50) includes:
a first memory configured to receive and store the first pixel value transmitted through the common column line group from the first pixel of the pixel pair of the selected row; and
a second memory configured to receive and store the second pixel value transmitted through the common column line group from the second pixel of the pixel pair of the selected row.

5. The image sensor of claim 3,
wherein, when one of the first and second row lines is activated, the peripheral circuit(12) includes a pixel bit transfer circuit configured to transfer each bit value of the pixel value acquired by a pixel connected to an activated row line among the pixel pair to the first stage memory.

6. The image sensor of claim 1,
wherein each of the first and second pixels includes:
a single-photon avalanche diode (SPAD) configured to detect photons and generate pulse signals; and
a counter(33) configured to acquire a pixel value by counting a number of the pulse signals.

7. The image sensor of claim 6,
wherein the column line group includes a number of column lines corresponding to a number of bits of the first and second pixel values.

8. The image sensor of claim 1,
wherein the peripheral circuit(12) sequentially activates the first and second row lines according to a command applied by an external control module; and
precharges a plurality of column lines of the common column line group before each of the first and second row lines is activated.

9. The image sensor of claim 8,
wherein the peripheral circuit(12) determines and stores the first and second pixel values by detecting a voltage level of each of a plurality of column lines changed depending on each bit value of the first and second values acquired in the first and second pixels.

10. A method of operating an image sensor including a pixel array(11) and a peripheral circuit(12), wherein the pixel array(11) including a plurality of pixel pairs including first and second pixels connected to each of first and second row lines extending in a row direction and commonly connected to a common column line group extending in a column direction and arranged in a matrix form, the method comprising:
respectively acquiring first and second pixel values by the first and second pixels of the plurality of pixel pairs;
sequentially receiving and storing, by the peripheral circuit(12), the first and second pixel values acquired by the first and second pixels through the common column line group from a pixel pair disposed in a selected row; and
outputting the first and second pixel values received and stored in a first stage memory(50) by a second stage memory(60) of the peripheral circuit(12) while first and second pixel values of another pixel pair are stored in the first stage memory(50) of the peripheral circuit(12).

11. The method of claim 10,
wherein the sequentially receiving and storing includes:
activating the first row line among the first and second row lines of the selected row to select the first pixel; and
storing the first pixel value in the first stage memory(50) of the peripheral circuit(12) when the first pixel value acquired by the selected first pixel is transmitted through the common column line groups.

12. The method of claim 11,
wherein the sequentially receiving and storing includes:
after the first pixel value is stored, activating the second row line to select the second pixel; and
storing the first pixel value in the first stage memory(50) of the peripheral circuit(12) when the second pixel value acquired by the selected second pixel is transmitted through the common column line group.

13. The method of claim 12,
wherein the sequentially receiving and storing includes:
storing the first pixel value in a first memory of the first stage memory(50); and
storing the second pixel value in a second memory of the first stage memory(50) distinguished from the first memory.

14. The method of claim 12,
wherein the sequentially receiving and storing includes:
after the second pixel value is stored, transmitting the first and second pixel values stored in the first stage memory to the second stage memory of the peripheral circuit(12) to store therein.

15. The method of claim 12,
wherein the acquiring of the first and second pixel values includes:
driving a SPAD in each of the first and second pixels of the plurality of pixel pairs;
detecting, by the driven SPAD, incident photons to generates pulse signals; and
acquiring the first and second pixel values by counting a number of the generated pulse signals.
